# FASCICULE DE BREVET EUROPEEN

(11) **EP 4 150 918 B1**
(45) Date de publication et mention de la délivrance du brevet: **11.06.2025**
(21) Numéro de dépôt: 21731254.5
(22) Date de dépôt: 11.05.2021
(51) Int. Cl.: H04R 1/02, G10K 11/178, B32B 17/00, B60J 1/00, B32B 17/10

(54) **VITRAGE DE VEHICULE AVEC EXCITATEUR AUDIO**
FAHRZEUGVERGLASUNG MIT AUDIOTREIBER
GLAZING FOR VEHICLE WITH AUDIO EXCITER

(30) Priorité: 13.05.2020 FR 2004695
(43) Date de publication de la demande: 22.03.2023
(73) Titulaire: Saint-Gobain Sekurit France, 60150 Thourotte (FR)
(72) Inventeur: BOURE, Jean-Philippe, 60170 RIBECOURT-DRESLINCOURT (FR); LALLEMENT, Antoine, 60200 COMPIEGNE (FR)
(74) Mandataire: Saint-Gobain Recherche
(86) Numéro de dépôt international: PCT/FR2021/050819
(87) Numéro de publication internationale: WO 2021/229179

(56) Documents cités:
- EP-A1- 0 382 602
- FR-A1- 2 916 380
- US-B1- 9 621 994

## Description

### Domaine de l'invention

La présente invention concerne un vitrage de véhicule comprenant au moins un excitateur audio.

### Arrière-plan technique

Les excitateurs audio ou de surface permettent de générer du son à partir d'une paroi quelconque (plâtre, verre, bois...) pour des fonctions principalement audio mais également pour des applications particulières comme le contrôle actif du bruit ou des vibrations. La génération du son est provoquée par les vibrations de la structure sur laquelle est fixé l'excitateur via une connexion rigide.

Par exemple, le document WO 2013/164540 décrit un vitrage comprenant un transducteur piézoélectrique formé d'un élément piézoélectrique situé entre deux électrodes, pour des applications diverses telles que : pour nettoyer la poussière présente sur le vitrage, comme haut-parleur, comme microphone, comme générateur électrique ou pour atténuer ou amplifier des sons venant de l'extérieur ou l'intérieur d'un bâtiment.

Dans le secteur particulier de l'automobile, de nouvelles fonctionnalités audio se développent. Outre le divertissement traditionnel, le divertissement avancé, le contrôle actif du bruit, l'assistant personnel vocal, la conception sonore du moteur sont de nouvelles fonctionnalités rendues possibles aujourd'hui par les développements technologiques dans les transducteurs, les contrôleurs et le traitement du signal. Pour réaliser ces fonctions, les voitures d'aujourd'hui sont équipées d'un nombre croissant de capteurs et d'excitateurs de surface audios.

Comparés aux haut-parleurs utilisés classiquement, les excitateurs audio peuvent être plus légers. De par leur faible encombrement, ils peuvent être intégrés dans les panneaux de porte, les différentes garnitures (telles que celles du toit ou des montants), et ainsi être positionnés dans l'habitacle au plus proche des oreilles des passagers. Ils peuvent s'ajouter aux haut-parleurs standards, voire s'y substituer.

Toutefois, l'intégration de tels équipements est soumise à une contrainte spécifique au domaine de l'automobile : celle-ci doit satisfaire aux normes (telles que les normes ECE R21 et ECE R26) et aux cahiers des charges des constructeurs automobiles pour la sécurité des passagers de l'habitacle automobile.

Il existe un besoin de mettre au point un système audio pour véhicule pouvant être plus léger, avec une bonne performance sonore, et respectant la sécurité des passagers.

Le document US 9621994 décrit un transducteur acoustique de surface adapté pour produire un son dans une cabine d'un véhicule, en particulier d'un avion, en faisant vibrer les parois intérieures de la cabine ou d'un vitrage de véhicule.

Le document EP 0 382 602 décrit un vitrage prêt à la pose pour un véhicule automobile, comprenant sur sa périphérie un cordon adhésif thermoplastique.

Le document FR 2 916 380 décrit un procédé de surmoulage d'une portion de joint formée d'une matière plastique.

### Résumé de l'invention

L'invention concerne en premier lieu un vitrage de véhicule selon la revendication 1.

Dans des modes de réalisation, la base est fixée à la feuille de verre ou à l'ensemble vitré au moyen d'un ruban adhésif double face ou de colle.

Dans des modes de réalisation, l'excitateur audio est fixé sur la partie d'accroche par vissage et/ou par emboîtement.

Dans des modes de réalisation, la feuille de verre est en verre organique ou minéral, ou l'ensemble vitré comprend au moins une feuille de verre qui est en verre organique ou minéral.

Dans des modes de réalisation, le vitrage comprend un ensemble vitré et l'ensemble vitré est un vitrage feuilleté comprenant au moins deux feuilles de verre entre lesquelles est inséré au moins un film intercalaire en matière plastique viscoélastique, le film intercalaire en matière plastique viscoélastique étant de préférence en PVB (polyvinyle butyral) ou en copolymère éthylène-acétate de vinyle, en particulier en PVB standard ou, plus préférentiellement, en PVB acoustique.

Dans des modes de réalisation, la pièce en matière plastique est surmoulée sur au moins une partie de la base du système de fixation.

Dans des modes de réalisation, la base du système de fixation comprend une semelle montée sur la feuille de verre ou sur l'ensemble vitré et surmontée d'une embase, la semelle faisant saillie par rapport à l'embase.

Dans des modes de réalisation, le système de fixation est en matériau métallique, tels que l'aluminium et/ou l'acier inoxydable, en matériau thermoplastique, tel que les polyphthalamides, le poly(chlorure de vinyle) et/ou le poly(téréphtalate d'éthylène), ou en une combinaison de ceux-ci.

Dans des modes de réalisation, la pièce en matière plastique est en polyuréthane, polypropylène, ou une combinaison de ceux-ci.

Dans des modes de réalisation, la base du système de fixation est thermoformée dans la pièce en matière plastique, de préférence le système de fixation est thermoformé dans la pièce en matière plastique.

Dans des modes de réalisation, la pièce en matière plastique et la base du système de fixation sont en polyéthylène, élastomère thermoplastique, acrylonitrile butadiène styrène, ou une combinaison de ceux-ci.

Dans des modes de réalisation, le vitrage est un pare-brise, une lunette arrière, un vitrage latéral et/ou un vitrage de toit d'un véhicule, de préférence automobile.

L'invention concerne également des procédés de fabrication d'un vitrage selon les revendications 13 et 14.

La présente invention permet de répondre au besoin exprimé ci-dessus. Elle fournit plus particulièrement un vitrage pour véhicule avec un système audio léger et compact et offrant de bonnes performances sonores. En outre, le vitrage selon l'invention est adapté à tout véhicule et permet de respecter la sécurité des passagers du véhicule dans lequel il est placé.

Cela est accompli grâce à l'association d'un excitateur audio à une feuille de verre ou à un ensemble vitré via un système de fixation spécifique. En effet, les vitrages dans les véhicules présentant généralement une grande superficie, ils permettent d'offrir à l'excitateur audio une grande surface capable d'entrer en vibration pour produire un son, permettant ainsi une performance sonore optimale. De plus, ils sont typiquement situés proche des oreilles des passagers du véhicule, ce qui permet une meilleure expérience auditive pour les passagers. En outre, le système de fixation selon l'invention reliant l'excitateur à la feuille de verre ou à l'ensemble vitré permet de satisfaire aux contraintes imposées par les normes vis-à-vis de la sécurité des passagers du véhicule.

### Brève description des figures

[Fig.1] représente une vue schématique d'un exemple de système de fixation utilisable dans le vitrage selon l'invention.
[Fig.2] représente une vue schématique d'un autre exemple de système de fixation utilisable dans le vitrage selon l'invention.
[Fig.3] représente une vue schématique d'un autre exemple de système de fixation utilisable dans le vitrage selon l'invention.
[Fig.4] représente un autre exemple de système de fixation utilisable dans le vitrage selon l'invention.
[Fig.5] représente une vue schématique d'un autre exemple de système de fixation utilisable dans le vitrage selon l'invention.
[Fig.6] représente une vue schématique d'un autre exemple de système de fixation utilisable dans le vitrage selon l'invention.
[Fig.7] représente une vue schématique d'un autre exemple de système de fixation utilisable dans le vitrage selon l'invention.
[Fig.8] représente une vue schématique d'un autre exemple de système de fixation utilisable dans le vitrage selon l'invention.
[Fig.9] représente une vue en coupe schématique d'une portion d'un exemple de vitrage selon l'invention.
[Fig.10] représente une vue en coupe schématique d'une portion d'un autre exemple de vitrage selon l'invention.
[Fig.11] représente une vue en coupe schématique d'une portion d'un autre exemple de vitrage selon l'invention.
[Fig.12] représente une vue en coupe schématique d'un exemple d'installation permettant la fabrication d'un vitrage selon l'invention. Sur cette figure, seules une partie du moule et une portion de la feuille de verre ont été représentées.

### Description détaillée

L'invention est maintenant décrite plus en détail et de façon non limitative dans la description qui suit.

L'invention concerne un vitrage de véhicule. Le véhicule peut être tout type de véhicule comprenant au moins un vitrage. De préférence, il s'agit d'un véhicule à moteur de transport terrestre, bien que la présente invention soit également applicable à des vitrages de véhicules aéronautiques, tels que les hélicoptères, avions et navires. Plus préférentiellement, le véhicule est un véhicule automobile (voiture). Alternativement, le véhicule peut être un camion, une camionnette, ou un bus ou car.

Au sens de la présente invention, un « *vitrage* » désigne toute structure comprenant au moins une feuille de verre ou un ensemble vitré. Ainsi, le vitrage peut par exemple comprendre une feuille de verre simple ou bien un ensemble vitré constitué d'un vitrage feuilleté constitué d'au moins deux feuilles de verre entre lesquelles est disposé un intercalaire en matière plastique viscoélastique. Par *« ensemble vitré* » on entend un élément vitré multicouche dont au moins une couche est une feuille de verre.

La feuille de verre, ou l'ensemble vitré, peut être transparent(e) ou opaque, par exemple lorsque la feuille de verre ou l'ensemble vitré est recouvert(e) d'un revêtement opaque. Le revêtement opaque peut être une peinture ou un émail, par exemple de couleur noire. La feuille de verre ou l'ensemble vitré peut comprendre une partie vitrée transparente et une partie vitrée opaque, de préférence la partie vitrée opaque entourant la partie vitrée transparente. En alternative, la feuille de verre, ou l'ensemble vitré, peut être teinté(e) dans l'épaisseur, sur tout ou partie de sa surface.

La feuille de verre est en verre organique ou minéral. La feuille de verre peut être en verre trempé.

Plus préférentiellement, le vitrage selon l'invention comprend un ensemble vitré. L'ensemble vitré comprend au moins une feuille en verre. Le verre peut être du verre organique ou minéral. Le verre peut être trempé. L'ensemble vitré est de préférence un vitrage feuilleté. Par « *vitrage feuilleté* », on entend au moins deux feuilles de verre entre lesquelles est inséré au moins un film intercalaire en matière plastique viscoélastique. L'utilisation d'un vitrage feuilleté, par rapport à une feuille de verre simple, résulte en une réponse plus plate en raison de l'amortissement conféré par le film intercalaire, ce qui améliore la réponse du système audio, en particulier en ce qui concerne les basses fréquences. Le film intercalaire en matière plastique viscoélastique peut comprendre une ou plusieurs couches d'un polymère viscoélastique tel que le poly(butyral de vinyle) (PVB) ou un copolymère éthylène-acétate de vinyle (EVA), plus préférentiellement le PVB. Le film intercalaire est de préférence en PVB standard ou, de façon encore plus préférée, en PVB acoustique (tel que le PVB acoustique mono-couche ou tri-couche). Le PVB acoustique est généralement constitué de trois couches : deux couches externes en PVB standard et une couche interne en PVB additionné de plastifiant pour la rendre moins rigide que les couches externes. L'utilisation, dans un vitrage feuilleté, d'un PVB acoustique, par rapport à un PVB standard, permet d'encore améliorer la restitution en basses fréquence et de réduire les problèmes vibratoires..

Le vitrage selon l'invention peut être tout vitrage de véhicule. En particulier, il peut s'agir d'un pare-brise, de tout vitrage latéral, en particulier un vitrage de portière, d'une lunette arrière et/ou d'un vitrage de toit.

Le vitrage selon l'invention peut avoir toute forme possible. Dans certains modes de réalisation, le vitrage est de forme quadrilatérale, en particulier de forme rectangulaire ou essentiellement rectangulaire, ou de forme trapézoïdale ou essentiellement trapézoïdale. Les bords du vitrage peuvent être droits ou essentiellement droits (ils peuvent présenter une légère courbure) et/ou être courbes. En particulier, la feuille de verre ou l'ensemble vitré du vitrage peut avoir les formes mentionnées ci-dessus.

Le vitrage selon l'invention peut être un vitrage collé (ou destiné à être collé) ou non collé. Le vitrage peut être un vitrage encapsulé ou non encapsulé. Par « *vitrage encapsulé »,* on entend un vitrage dans lequel la feuille de verre ou l'ensemble vitré est recouvert(e) sur au moins une partie de sa bordure par un matériau polymère surmoulé sur ladite feuille de verre ou sur ledit ensemble vitré. Cette partie polymère surmoulée est appelée joint d'encapsulation. De préférence, le joint d'encapsulation entoure ladite partie de bordure de la feuille de verre, ou de l'ensemble vitré, c'est-à-dire qu'il est positionné contre le chant de la feuille de verre, ou de l'ensemble vitré, et sur le bord des deux surfaces principales opposées de la feuille de verre, ou de l'ensemble vitré. Avantageusement, un vitrage encapsulé comporte un joint d'encapsulation sur la totalité de la bordure de la feuille de verre ou de l'ensemble vitré (c'est-à-dire sur toute la périphérie de la feuille de verre ou de l'ensemble vitré).

Le vitrage selon l'invention comprend au moins un excitateur audio. A ce titre, il forme un système audio, c'est-à-dire un système capable d'émettre des sons. Dans des modes de réalisation, le vitrage peut comprendre un unique excitateur audio, ou au moins deux excitateurs audio, ou au moins 3, ou au moins 4, ou au moins 5, ou au moins 10, ou au moins 15 excitateurs audio, par exemple de 1 à 2, ou de 2 à 3, ou de 3 à 4, ou de 4 à 5, ou de 5 à de 5 à 6, ou de 6 à 7, ou de 7 à 8, ou de 8 à 9, ou de 9 à 10, ou de 10 à 12, ou de 12 à 15, ou de 15 à 20 excitateurs audio. Lorsque le vitrage comprend plusieurs excitateurs audio, les caractéristiques décrites ci-dessous peuvent s'appliquer à au moins un des excitateurs audio, à chaque excitateur audio indépendamment, ou à l'ensemble des excitateurs audio.

L'excitateur audio (ou actionneur, ou transducteur) selon l'invention peut être tout excitateur transformant un courant électrique en énergie mécanique permettant de faire vibrer une surface, utilisée comme une membrane, pour créer une onde acoustique. Dans le cadre de la présente invention, la surface que l'excitateur fait vibrer comprend ou est la feuille de verre ou l'ensemble vitré.

L'excitateur audio peut être un excitateur audio piézoélectrique ou un excitateur audio électrodynamique (ou excitateur à inertie). De manière particulièrement préférée, l'excitateur audio est un excitateur électrodynamique. En effet, les excitateurs piézoélectriques requièrent une très haute tension et comprennent généralement des composants électroniques coûteux et lourds.

Avantageusement, l'excitateur audio a une masse inférieure à 300 g, de préférence de 100 à 200 g. L'excitateur audio peut avoir une masse de 30 à 50 g, ou de 50 à 80 g, ou de 80 à 100 g, ou de 100 à 120 g, ou de 120 à 150 g, ou de 150 à 180 g, ou de 180 à 200 g, ou de 200 à 300 g.

L'excitateur audio a avantageusement un diamètre de 10 à 150 mm, par exemple de 30 à 100 mm. Alternativement, l'excitateur audio peut avoir une longueur de 30 à 200 mm, par exemple de 50 à 150 mm, et/ou une largeur de 10 à 100 mm, par exemple de 20 à 60 mm. L'excitateur audio peut avoir une profondeur de 10 à 50 mm, par exemple de 12 à 30 mm.

L'excitateur audio peut être configuré pour générer des hautes fréquences et/ou des moyennes fréquences et/ou des basses fréquences. Par *« hautes fréquences »,* on entend les ondes sonores de fréquence supérieure à 2000 Hz. Par *« moyennes fréquences »,* on entend les ondes sonores de fréquence allant de 300 à 2000 Hz. Par *« basses fréquences »,* on entend les ondes sonores de fréquence inférieure à 300 Hz. L'excitateur audio peut comprendre un filtre de signal pour limiter la bande de fréquences générées, par exemple à des fréquences hautes et/ou moyennes et/ou basses. Par exemple, le filtre de signal peut limiter la bande de fréquences émises à une plage de fréquences, cette plage de fréquences ayant une borne inférieure qui est supérieure ou égale à 2000 Hz, ou qui est supérieure ou égale à 300 Hz, ou qui est supérieure ou égale à 150 Hz, ou cette plage de fréquences ayant une borne supérieure qui est inférieure ou égale à 300 Hz.

L'excitateur audio peut être placé à tout endroit sur la feuille de verre ou sur l'ensemble vitré. De préférence, il est positionné dans une zone périphérique de la feuille de verre ou de l'ensemble vitré. Par « *zone périphérique de la feuille de verre »* ou *« zone périphérique de l'ensemble vitré* », on entend une partie de la feuille de verre, ou respectivement de l'ensemble vitré, adjacente aux bords de la feuille de verre ou de l'ensemble vitré, respectivement (c'est-à-dire aux bords délimitant la feuille de verre ou l'ensemble vitré). Dans des modes de réalisation, la zone périphérique de la feuille de verre ou de l'ensemble vitré est la zone de la feuille de verre ou de l'ensemble vitré adjacente aux bords de la feuille de verre ou de l'ensemble vitré et de largeur (c'est-à-dire selon une direction orthogonale au bord de la feuille de verre, ou de l'ensemble vitré, dans le plan de la feuille de verre, ou de l'ensemble vitré) inférieure ou égale à 30 cm, ou inférieure ou égale à 25 cm, ou inférieure ou égale à 20 cm, ou inférieure ou égale à 15 cm.

Lorsque le vitrage est destiné à être orienté verticalement ou de manière essentiellement verticale dans le véhicule (en particulier lorsqu'il est destiné à être un pare-brise, un vitrage latéral ou une lunette arrière), l'excitateur est avantageusement situé sur une zone périphérique de la feuille de verre, ou de l'ensemble vitré, adjacente au bord inférieur de la feuille de verre, ou de l'ensemble vitré (c'est-à-dire le bord destiné à être du côté du bas du véhicule).

Lorsque le vitrage est un pare-brise, l'excitateur peut, additionnellement ou alternativement, être situé sur une zone périphérique de la feuille de verre, ou de l'ensemble vitré, adjacente au bord supérieur de la feuille de verre, ou de l'ensemble vitré, (c'est-à-dire le bord destiné à être du côté du haut du véhicule), de préférence dans une zone centrale de cette zone périphérique supérieure (par exemple dans une zone de la zone périphérique supérieure s'étendant sur une longueur de 30 cm, de préférence de 20 cm, selon une direction parallèle au bord supérieur du pare-brise, de part et d'autre du centre du bord supérieur). De préférence encore, lorsque le pare-brise comprend un rétroviseur intérieur ou est destiné à en comprendre un, l'excitateur audio est situé proche des fixations du rétroviseur intérieur du pare-brise (par exemple dans une zone du pare-brise circulaire de rayon inférieur ou égal à 15 cm dont le centre est constitué par les fixations du rétroviseur intérieur ou par l'emplacement destiné à recevoir les fixations du rétroviseur intérieur).

La feuille de verre ou l'ensemble vitré peut comprendre un ou plusieurs trous pour le passage des fils d'alimentation de l'excitateur audio.

L'excitateur audio est assemblé sur la feuille de verre ou sur l'ensemble vitré *via* un système de fixation. Le système de fixation comprend une base montée sur la feuille de verre ou sur l'ensemble vitré et une partie d'accroche sur laquelle est fixée l'excitateur. De préférence, l'excitateur est fixé sur la partie d'accroche du système de fixation de manière amovible. Cela présente l'avantage que l'excitateur peut être facilement retiré et changé, par exemple en cas de panne.

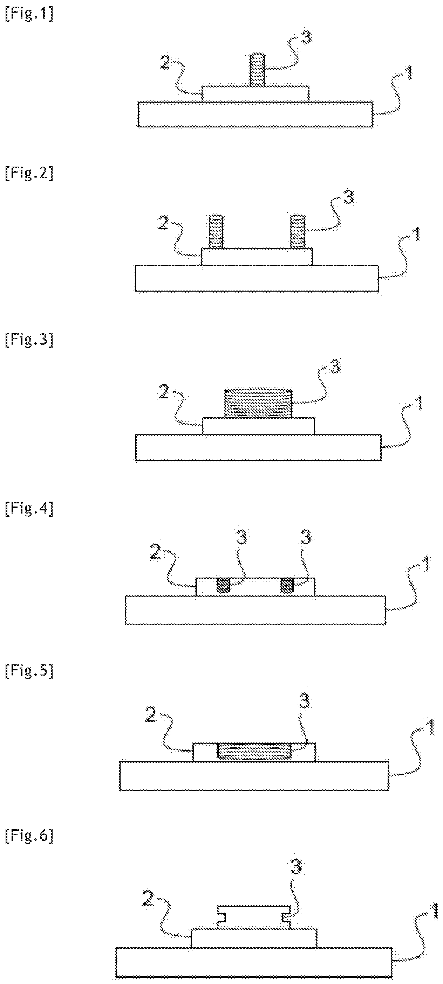

L'excitateur audio peut être fixé sur la partie d'accroche du système de fixation par vissage. En particulier, la partie d'accroche peut comprendre ou consister en une ou plusieurs pièces filetées faisant saillie de la base du système de fixation. Dans ces modes de réalisation, l'excitateur audio comprend un ou plusieurs trous taraudés capables de se visser sur la ou les pièces filetées du système de fixation. Des exemples de système de fixation comprenant une base constituée d'une semelle 1 et d'une embase 2, et une partie d'accroche filetée 3 sont représentés en **figures 1, 2** et **3****.**

En référence à la **figure 1****,** le système de fixation peut comprendre en tant que partie d'accroche 3 une tige filetée (ou vis) positionnée au centre de l'embase 2, et entièrement localisée dans la zone centrale de l'embase (par exemple dans une zone centrée sur le centre de l'embase et dont la distance de sa bordure à son centre vaut la moitié, de préférence 25 %, de la distance du centre de l'embase à ses bords). Dans ces modes de réalisation, la tige filetée est destinée à se visser dans un trou taraudé situé dans l'excitateur audio, de préférence au centre de celui-ci.

En référence à la **figure 2****,** le système de fixation peut comprendre en tant que partie d'accroche 3 au moins deux tiges filetées, située dans une zone périphérique de l'embase (par exemple dans une zone adjacente au(x) bord(s) de l'embase 2 de largeur (selon une direction orthogonale au bord) égale à la moitié de la distance du bord de l'embase au centre de l'embase, de préférence égale à 25 % de la distance du bord au centre de l'embase). Les tiges sont de préférence alignées deux à deux avec le centre de l'embase 2, de préférence encore symétriques deux à deux par rapport au centre de l'embase 2. Dans ces modes de réalisation, les tiges filetées sont destinées à se visser dans des trous taraudés, situés de préférence dans une zone périphérique de l'excitateur audio.

En référence à la **figure 3****,** le système de fixation peut comprendre en tant que partie d'accroche 3 une tige filetée, pleine ou creuse, centrée sur le centre de l'embase 2 et dont le filetage est localisé dans la zone périphérique de l'embase 2. Dans ces modes de réalisation, la tige filetée est destinée à se visser dans un trou taraudé dans l'excitateur audio, dont le taraudage est de préférence localisé dans une zone périphérique de l'excitateur audio.

Alternativement, ou additionnellement, la partie d'accroche peut comprendre ou consister en un ou plusieurs trous taraudés présents dans la base ou dans une pièce faisant saillie de la base du système de fixation. Dans ces modes de réalisation, l'excitateur audio comprend une ou plusieurs pièces filetées capables de se visser dans le ou les trous taraudés du système de fixation. Des exemples de système de fixation comprenant une base constituée d'une semelle 1 et d'une embase 2, et une partie d'accroche taraudée 3 sont représentés en **figures 4** et **5****.**

En référence à la **figure 4****,** le système de fixation peut comprendre en tant que partie d'accroche 3 au moins deux trous taraudés dans l'embase 2 situés dans une zone périphérique de celle-ci. Les trous sont de préférence alignées deux à deux avec le centre de l'embase 2, de préférence encore symétriques deux à deux par rapport au centre de l'embase 2. Dans ces modes de réalisation, les trous taraudés sont destinés à recevoir des tiges filetées de l'excitateur audio, situées de préférence dans une zone périphérique de l'excitateur audio.

En référence à la **figure 5****,** le système de fixation peut comprendre en tant que partie d'accroche 3 un trou taraudé dans l'embase 2 centré sur le centre de celle-ci. Le taraudage peut être localisé dans une zone centrale de l'embase, ou dans une zone périphérique de l'embase. Dans ces modes de réalisation, le trou taraudé est destiné à recevoir une tige filetée de l'excitateur audio, pleine ou creuse, de préférence située au centre de l'excitateur audio.

Alternativement, ou additionnellement, à un mode de fixation par vissage, l'excitateur audio peut être fixé sur la partie d'accroche du système de fixation par emboîtement. Dans ces modes de réalisation, la partie d'accroche du système de fixation et l'excitateur audio comprennent chacun une ou plusieurs empreintes configurées pour s'emboîter les unes avec les autres. Des exemples de système de fixation comprenant une base constituée d'une semelle 1 et d'une embase 2, et une partie d'accroche 3 à empreintes sont représentés en **figures 6****,** **7** et **8****.**

En référence à la **figure 6****,** le système de fixation peut comprendre en tant que partie d'accroche 3 une partie saillante comprenant au moins une encoche, de préférence au moins deux encoches, sur sa ou ses faces latérales. La ou les encoches peuvent avoir toute forme adaptée, tel qu'une forme rectangulaire

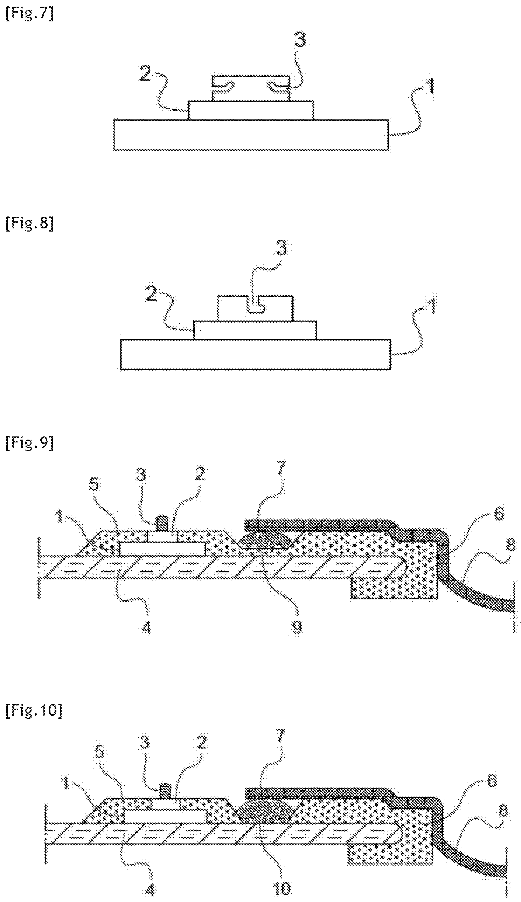

En référence à la **figure 7****,** le système de fixation peut comprendre en tant que partie d'accroche 3 une partie saillante comprenant au moins un clip, de préférence au moins deux clips, sur sa ou ses faces latérales.

En référence à la **figure 8****,** le système de fixation peut comprendre en tant que partie d'accroche 3 une partie saillante comprenant au moins une encoche sur sa face supérieure. L'encoche peuvent avoir toute forme adaptée.

La base du système de fixation peut comprendre une embase 2 positionnée sur la face supérieure d'une semelle 1. Par « *semelle* », on entend une pièce sous forme de plaque faisant saillie par rapport à l'embase (selon une direction orthogonale au plan principal de la feuille de verre ou de l'ensemble vitré). En d'autres termes, la semelle 1 dépasse de l'embase 2 (dans un plan parallèle au plan principal de la feuille de verre ou de l'ensemble vitré), de préférence sur la totalité du pourtour de l'embase 2. De préférence, la semelle 1 est fixée sur la feuille de verre ou sur l'ensemble vitré. Dans d'autres modes de réalisation, la base du système de fixation consiste en une embase 2.

De manière préférée, la partie d'accroche 3 du système de fixation est présente sur ou dans l'embase 2, plus particulièrement sur la face de l'embase 2 opposée à la face de l'embase faisant face à la semelle 1 ou à la feuille de verre ou à l'ensemble vitré.

L'embase 2 peut avoir toute forme possible. De manière avantageuse, l'embase 2 est un prisme ou un cylindre, dont la section transversale peut avoir toute forme, telle qu'une forme circulaire ou rectangulaire. Dans certains modes de réalisation, la face supérieure (ou la section transversale) de l'embase 2 a une forme similaire et des dimensions identiques ou essentiellement identiques à celles de la face inférieure de l'excitateur audio. L'embase 2 peut avoir un diamètre de 10 à 150 mm, par exemple de 30 à 100 mm. Dans d'autres modes de réalisation, l'embase 2 peut avoir une longueur de 30 à 200 mm, par exemple de 50 à 150 mm, et/ou une largeur de 10 à 100 mm, par exemple de 20 à 60 mm. L'embase 2 a avantageusement une épaisseur de 1 à 20 mm, par exemple de 3 à 8 mm.

La semelle 1 peut avoir n'importe quelle forme et a de préférence une forme circulaire ou rectangulaire. La semelle 1 peut avoir un diamètre de 15 à 200 mm, par exemple de 35 à 120 mm. Dans d'autres modes de réalisation, la semelle peut avoir une longueur de 35 à 250 mm, par exemple de 60 à 170 mm, et/ou une largeur de 15 à 150 mm, par exemple de 25 à 70 mm. La semelle 1 peut avoir une épaisseur de 1 à 10 mm, par exemple de 2 à 6 mm.

De préférence, l'embase 2 est centrée sur la face supérieure de la semelle 1.

De manière avantageuse, le système de fixation comprend ou est en matériau métallique, en matériau thermoplastique ou en une combinaison de ceux-ci. Des exemples de matériaux métalliques adaptés au système de fixation sont l'aluminium et/ou l'acier inoxydable. Des exemples de matériaux thermoplastiques sont les polyphthalamides, tels que ceux commercialisés sous le nom commercial Grivory^{®}, le poly(chlorure de vinyle) (PVC) et/ou le poly(téréphtalate d'éthylène) (PET). De manière préférée, le système de fixation ne comprend pas de matériau magnétique, en particulier si l'excitateur audio est un excitateur électrodynamique, de manière à ne pas interférer avec le circuit magnétique de l'excitateur.

En particulier, la partie d'accroche 3 et la base, et plus particulièrement la partie d'accroche 3, l'embase 2 et l'éventuelle semelle 1, peuvent indépendamment comprendre ou être en les matériaux mentionnés ci-dessus.

La base du système de fixation, notamment la semelle 1 et/ou l'embase 2, et/ou la partie d'accroche 3 peuvent former une pièce d'un seul tenant ou le système de fixation peut comprendre différentes pièces (par exemple une pièce pour la semelle 1, une pièce pour l'embase 2 et éventuellement une pièce pour la partie d'accroche 3) assemblées ensemble, par tout moyen adapté.

Le système de fixation est monté sur la feuille de verre ou sur l'ensemble vitré. Le vitrage peut comprendre un ou plusieurs systèmes de fixation, par exemple au moins 2, ou au moins 3, ou au moins 4, ou au moins 5, ou au moins 10, ou au moins 15 systèmes de fixation montés sur la feuille de verre ou sur l'ensemble vitré. De manière particulièrement avantageuse, le vitrage comprend un nombre identique d'excitateurs audio et de systèmes de fixation, chaque système de fixation ayant un excitateur audio fixé sur sa partie d'accroche 3. Les systèmes de fixation peuvent être identiques ou différents. Notamment, chaque système de fixation peut indépendamment être tel que décrit ci-dessus.

De préférence, la base du système de fixation est fixée à la feuille de verre ou à l'ensemble vitré. De manière plus préférée, la base est fixée sur la feuille de verre ou sur l'ensemble vitré au moyen de colle, d'un ruban adhésif, en particulier d'un ruban adhésif double-face, ou une combinaison de ceux-ci. Lorsque la base du système de fixation comprend une semelle 1, de manière particulièrement préférée, la semelle 1 est fixée à la feuille de verre ou à l'ensemble vitré, de préférence par de la colle et/ou un ruban adhésif, de préférence double face.

La fixation du système de fixation sur la feuille de verre ou sur l'ensemble vitré doit être de telle sorte à permettre le transfert des vibrations de l'excitateur audio à la feuille de verre ou à l'ensemble vitré. En d'autres termes, elle doit assurer au moins un point de contact (direct ou indirect) entre le système de fixation sur lequel est fixé l'excitateur audio et la feuille de verre ou l'ensemble vitré.

La base du système de fixation est liée à une pièce en matière plastique recouvrant en partie la feuille de verre ou l'ensemble vitré. On entend par *« liée* » dans la présente demande que la base du système de fixation est montée fixe à la pièce en matière plastique. Ainsi, la transmission des vibrations depuis l'excitateur audio vers la feuille de verre est améliorée au regard d'autres modes de fixation, ce qui permet d'obtenir des performances sonores optimales du vitrage.

### Surmoulage du système de fixation

Selon une première variante, la pièce en matière plastique 5 est surmoulée sur au moins une partie de la base du système de fixation. Dans cette variante, la pièce en matière plastique 5 est également appelée *« surmoulage* ». De préférence, la base est surmoulée par la matière plastique sur l'intégralité de sa périphérie.

Dans cette première variante, la base du système de fixation comprend de manière particulièrement avantageuse une embase 2 et une semelle 1, telles que décrites ci-dessus. La semelle et l'embase sont alors surmoulées, au moins en partie, par la matière plastique. Avantageusement, la semelle 1 est entièrement surmoulée, c'est-à-dire entièrement recouverte par le surmoulage. De préférence, l'embase 2 est entièrement surmoulée, à l'exception de sa face supérieure, c'est-à-dire que l'embase est en contact avec le surmoulage via sa ou ses faces latérales. De manière particulièrement préférée, la partie d'accroche 3 n'est pas surmoulée.

Avantageusement, la matière plastique du surmoulage comprend ou est du polyuréthane, du polypropylène, ou une combinaison de ceux-ci.

Dans les modes de réalisation dans lesquels le vitrage est un vitrage encapsulé, le surmoulage peut être continu avec le joint d'encapsulation. En référence à la **figure 9****,** un système de fixation, comprenant une semelle 1 surmontée d'une embase 2, elle-même surmontée d'une partie d'accroche 3 destinée à la fixation d'un excitateur audio, est fixé sur une feuille de verre 4. De manière alternative, la feuille de verre 4 peut être remplacée par un ensemble vitré, tel qu'un vitrage feuilleté. L'embase 2 et la semelle 1 sont surmoulées par un surmoulage 5 sur la totalité de leur périphérie. La partie d'accroche 3 n'est pas recouverte par le surmoulage 5. Dans ce mode de réalisation, le surmoulage 5 fait partie du joint d'encapsulation 6 qui recouvre la bordure de la feuille de verre 4. De manière particulièrement avantageuse, le joint d'encapsulation présente un décrochement 9 entre le surmoulage 5 entourant le système de fixation et la partie du joint d'encapsulation 6 entourant la bordure de la feuille de verre 4. Ce décrochement 9 est destiné à recevoir un joint de colle 7 pour fixer la carrosserie 8 au vitrage. La présence de ce décrochement 9 permet un collage uniforme du vitrage sur la carrosserie automobile 8.

Alternativement, le surmoulage peut être discontinu avec le joint d'encapsulation. En référence à la figure 10, un système de fixation, comprenant une semelle 1 surmontée d'une embase 2, elle-même surmontée d'une partie d'accroche 3 destinée à la fixation d'un excitateur audio, est fixé sur une feuille de verre 4. De manière alternative, la feuille de verre 4 peut être remplacée par un ensemble vitré, tel qu'un vitrage feuilleté. L'embase 2 et la semelle 1 sont surmoulées par un surmoulage 5 sur la totalité de leur périphérie. La partie d'accroche 3 n'est pas recouverte par le surmoulage 5. Dans ce mode de réalisation, le surmoulage 5 est distinct du joint d'encapsulation 6 qui recouvre la bordure de la feuille de verre 4. Une zone 10 dépourvue de matière plastique est ainsi présente entre le surmoulage 5 entourant le système de fixation et le joint d'encapsulation 6 entourant la bordure de la feuille de verre 4. Cette zone 10 d'interruption du joint d'encapsulation est destinée à recevoir un joint de colle 7 pour fixer la carrosserie 8 au vitrage. La présence de cette zone 10 d'interruption du joint d'encapsulation permet un collage uniforme du vitrage sur la carrosserie automobile 8.

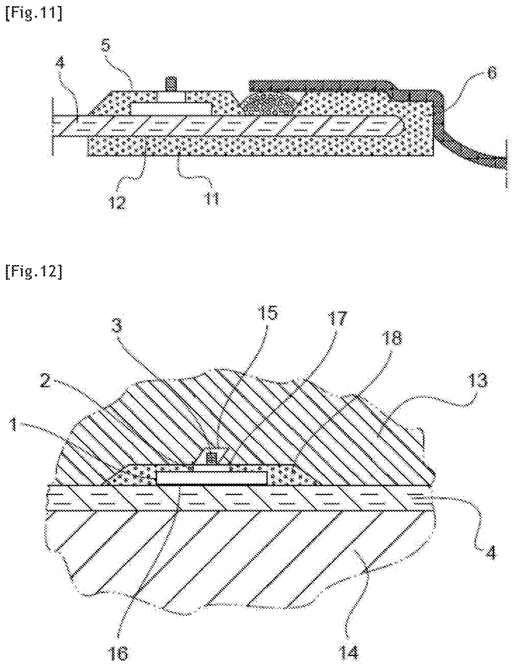

Dans des modes de réalisation avantageux, le système de fixation et le surmoulage sont rendus non-visibles du côté de la feuille de verre, ou de l'ensemble vitré, opposé au côté où le système de fixation est présent (ce côté correspondant à l'extérieur du véhicule lorsque le vitrage est assemblé dans un véhicule). Par exemple, la feuille de verre, ou l'ensemble vitré, peut avoir subi un émaillage sur la surface opposée à celle portant le système de fixation, sur une zone comprenant la zone recouverte par le système de fixation et le surmoulage. Alternativement, dans le cas des vitrages encapsulés, le joint d'encapsulation recouvrant la bordure de la feuille de verre ou de l'ensemble vitré peut être étendu sur la surface opposée à celle portant le système de fixation sur une zone comprenant la zone recouverte par le système de fixation et le surmoulage. Un exemple d'un tel mode de réalisation est montré dans la figure 11. Le joint d'encapsulation 6 englobant la feuille de verre 4 (qui peut alternativement être un ensemble vitré tel qu'un vitrage feuilleté) comprend une partie 11 s'étendant sur la surface extérieure 12 de la feuille de verre 4 (c'est-à-dire la surface opposée à la surface supportant le système de fixation), sur une portion suffisante pour cacher le système de fixation et son surmoulage 5. Dans l'exemple représenté en **figure 11****,** le joint d'encapsulation 6 et le surmoulage 5 sont discontinus. Le joint d'encapsulation et le surmoulage peuvent alternativement être continus, le joint d'encapsulation comportant de préférence un décrochement destiné à la réception de la colle pour fixer le vitrage à la carrosserie.

Le système de fixation surmoulé peut être situé dans la platine du pare-brise. Dans ces modes de réalisation, la platine comprend de préférence une ouverture dans laquelle est placé le système de fixation, surmoulé par la pièce en matière plastique. Cette platine est avantageusement thermoformée, de préférence elle est en polyéthylène. La platine peut également comprendre un rétroviseur, un capteur de pluie et/ou une caméra.

Les vitrages selon la première variante peuvent être fabriqués par un procédé de moulage par injection.

Ainsi, l'invention a également pour objet un procédé de fabrication d'un vitrage tel que décrit ci-dessus comprenant :
- le placement de la feuille de verre, ou de l'ensemble vitré, dans un moule ;
- le positionnement du système de fixation comprenant une base et une partie d'accroche dans le moule sur la feuille de verre, ou sur l'ensemble vitré ;
- la fermeture du moule de manière à créer une cavité de moulage autour de la base du système de fixation, la partie d'accroche du système de fixation étant hors de la cavité de moulage ;
- l'injection de matière plastique dans la cavité de moulage de manière à former un surmoulage ;
- l'ouverture du moule et le démoulage de la feuille de verre, ou de l'ensemble vitré, surmoulé(e) ;
- la fixation de l'excitateur audio sur la partie d'accroche du système de fixation.

Le moule comprend au moins une partie mobile et au moins une autre partie, qui peut être fixe ou mobile.

De préférence, lors du positionnement du système de fixation dans le moule, la partie d'accroche du système de fixation est disposée dans un logement formé dans une partie du moule, de préférence dans une partie mobile du moule. Préférentiellement, le système de fixation est positionné dans le moule de sorte à ce que la face supérieure de la base (c'est-à-dire opposée à la face faisant face à la feuille de verre ou à l'ensemble vitré), de préférence encore la face supérieure de l'embase, soit au moins en partie appuyée contre la surface intérieure de la partie du moule comprenant le logement pour la partie d'accroche. Optionnellement, un joint d'étanchéité, de préférence un joint torique, peut être placé sur le système de fixation, de préférence sur la face supérieure de la base, de préférence encore sur la face supérieure de l'embase, autour de la partie d'accroche, de préférence encore le long de la bordure de la face supérieure de l'embase.

De manière préférée, la base du système de fixation est fixée sur la feuille de verre, ou sur l'ensemble vitré, au moyen de colle, d'un ruban adhésif, en particulier d'un ruban adhésif double-face, ou d'une combinaison de ceux-ci. Ainsi, on peut déposer de la colle sur la face inférieure de la base (c'est-à-dire la face destinée à faire face à la feuille de verre ou à l'ensemble vitré et/ou on peut retirer le film protecteur du ruban adhésif double face préalablement collé sur la face inférieure de la base du système de fixation.

Le moule est ensuite fermé par le déplacement de la partie mobile du moule. Une cavité de moulage est alors formée autour de la base du système de fixation. De préférence, la semelle du système de fixation est entièrement contenue dans la cavité de moulage. Avantageusement, la partie du moule comprenant le logement pour la partie d'accroche vient en appui contre une face supérieure (c'est-à-dire opposée à la face faisant face à la feuille de verre ou à l'ensemble vitré) de la base, de préférence de l'embase. Le joint d'étanchéité est avantageusement placé entre la face supérieure de la base, de préférence de l'embase, et la partie du moule comprenant le logement pour la partie d'accroche. Cela permet d'assurer l'étanchéité du logement abritant la partie d'accroche, de manière à ce que la matière plastique n'atteigne pas la partie d'accroche pendant l'injection. L'étanchéité peut également être atteinte par un contact direct entre la face supérieure de la base et la surface intérieure de la partie du moule comprenant le logement.

La matière plastique injectée dans la cavité de moulage est de préférence du polyuréthane, du polypropylène, ou une combinaison de ceux-ci. La matière plastique est injectée à l'état fondu. La semelle du système de fixation peut comprendre une ou plusieurs ouvertures sur la face supérieure (c'est-à-dire opposée à la face faisant face à la feuille de verre ou à l'ensemble vitré), de préférence ces ouvertures sont traversantes. Cela permet un meilleur ancrage du système de fixation dans la matière plastique formant le surmoulage. De préférence, la cavité de moulage est complètement remplie avec la matière plastique.

La matière plastique dans la cavité de moulage se solidifie pour former un surmoulage de matière plastique sur au moins une partie de la base du système de fixation. Puis le moule est ouvert, de préférence par le déplacement de la partie mobile, par exemple au moyen d'une presse. La feuille de verre, ou l'ensemble vitré, comprenant le système de fixation et le surmoulage (appelé(e) aussi « *feuille de verre surmoulée* » ou « *ensemble vitré surmoulé* » respectivement) peut être retiré(e) du moule.

Un exemple d'utilisation d'un moule pour fabriquer un exemple de vitrage selon l'invention est illustré en **figure 12****.** Dans cet exemple, le moule utilisé comprend une partie mobile 13 comprenant un logement 15 et une seconde partie 14 pouvant être fixe ou mobile. Le moule contient une feuille de verre 4 (ou peut alternativement contenir un ensemble vitré, tel qu'un vitrage feuilleté) sur laquelle est fixé un système de fixation comprenant une semelle 1 sous forme de plaque surmontée d'une embase cylindrique 2, elle-même surmontée d'une partie d'accroche 3 consistant en une tige filetée. La semelle 1 est collée sur la feuille de verre 4 par un adhésif 16 situé entre la face inférieure de la semelle 1 et la feuille de verre 4. Le moule est fermé formant ainsi une cavité de moulage 18 autour de la semelle 1 du système de fixation et d'une partie de l'embase 2. Le système de fixation a été positionné de sorte à ce que la partie d'accroche 3 soit placée dans le logement 15 du moule et à ce qu'une partie de la face supérieure de l'embase 2 soit en contact avec le moule, et plus particulièrement avec la face intérieure de la partie 13 du moule comprenant le logement 15. L'intérieur du logement 15 est ainsi isolé de la cavité de moulage 18 en raison de la présence de l'embase 2. Un joint torique 17 d'étanchéité peut être inséré entre le pourtour de la face supérieure de l'embase 2 et la partie du moule 13. La cavité de moulage 18 a été totalement remplie de matière plastique qui, en durcissant, formera le surmoulage.

La cavité de moulage peut avoir toute forme adaptée. Dans d'autres modes de réalisation, la cavité de moulage peut contenir la bordure de la feuille de verre, ou de l'ensemble vitré, de manière à ce que l'injection de matière plastique forme également un joint d'encapsulation entourant ladite bordure de la feuille de verre ou de l'ensemble vitré. De préférence, la cavité de moulage comprend un relief vers l'intérieur de la cavité permettant de créer une zone de décrochement ou une zone d'interruption (dans ce cas, le relief s'étend jusqu'à entrer en contact avec une portion de la feuille de verre ou de l'ensemble vitré, séparant la cavité en deux) entre le surmoulage entourant le système de fixation et la partie du joint d'encapsulation entourant la bordure de la feuille de verre ou de l'ensemble vitré. La cavité peut également être de telle sorte qu'une portion de la face extérieure de la feuille de verre ou de l'ensemble vitré (c'est-à-dire la face opposée à la face portant le système de fixation) soit incluse à l'intérieur de la cavité, au contact de la matière plastique injectée, de préférence de manière à ce que le joint d'encapsulation formé déborde sur la face extérieure de la feuille de verre ou de l'ensemble vitré sur une zone allant au moins jusqu'à l'extrémité du surmoulage entourant le système de fixation.

### Thermoformage du système de fixation

Selon une deuxième variante, la base du système de fixation est thermoformée dans (ou avec) la pièce en matière plastique. Dans cette deuxième variante, la pièce de plastique et la base du système de fixation forment une pièce d'un seul tenant.

Avantageusement, l'ensemble du système de fixation est thermoformé dans (ou avec) la pièce en matière plastique.

La pièce en matière plastique est de préférence une platine. La platine peut également comprendre un rétroviseur, un capteur de pluie et/ou une caméra. De préférence encore le vitrage est un pare-brise. De préférence encore, la platine est localisée dans une zone centrale de la zone périphérique supérieure du pare-brise, telle que définie ci-dessus.

La pièce en matière plastique peut avoir n'importe quelle forme. De préférence, elle a une épaisseur de 1 à 4 mm, par exemple de 1,5 à 2,5 mm.

Dans cette deuxième variante, la base du système de fixation peut comprendre une embase et une semelle ou une unique embase.

De manière particulièrement avantageuse, l'ensemble de la pièce en matière plastique et de la base du système de fixation sont fixées sur la feuille de verre, ou sur l'ensemble vitré, par collage. Dans certains modes de réalisation, le collage est un collage par point. De manière particulièrement préférée, la base du système de fixation est fixée à la feuille de verre ou à l'ensemble vitré par au moins un point de colle, de manière à assurer le transfert des vibrations de l'excitateur audio à la feuille de verre ou à l'ensemble vitré. Cependant, tout autre moyen de fixation permettant de garantir ce transfert vibratoire peut être utilisé.

De préférence, la pièce en matière plastique et la base du système de fixation, de préférence l'ensemble du système de fixation, sont en polyéthylène, en élastomère thermoplastique (TPE), en acrylonitrile butadiène styrène (ABS), ou en une combinaison de ceux-ci.

Les vitrages selon la deuxième variante peuvent être fabriqués par un procédé de thermoformage. Un tel procédé de fabrication peut comprendre :
- le placement d'un bloc de matière plastique dans un moule;
- le chauffage du bloc de matière plastique;
- le refroidissement de la matière plastique, de manière à obtenir une pièce thermoformée ;
- le démoulage de la pièce thermoformée ;
- l'assemblage de la pièce thermoformée avec la feuille de verre ou l'ensemble vitré ;
- la fixation de l'excitateur audio sur la partie d'accroche du système de fixation.

Le moule est configuré pour former la pièce de plastique et la base du système de fixation, et de manière plus préférée, pour former la pièce de plastique et le système de fixation comprenant une base et une partie d'accroche tel que décrit ci-dessus. Après avoir été placé dans le moule, le bloc de matière plastique est chauffé jusqu'à obtenir son ramollissement. La matière plastique prend alors la forme imposée par le moule puis est refroidie de manière à se rigidifier. Une pièce thermoformée, comprenant la pièce en matière plastique et la base du système de fixation, de préférence le système de fixation, est obtenue.

Le bloc de matière plastique peut être une bloc de polyéthylène, de TPE, d'ABS, ou d'une combinaison de ceux-ci.

La pièce thermoformée est de préférence assemblée avec la feuille de verre, ou avec l'ensemble vitré, par collage.

### Véhicule

L'invention est destinée à équiper un véhicule, de préférence un véhicule automobile. L'au moins un excitateur audio est ainsi destiné à être localisé dans l'habitacle du véhicule. En d'autres termes, il est destiné à être situé sur la surface intérieure de la feuille de verre, ou de l'ensemble vitré.

L'excitateur audio peut être destiné à être recouvert ou entouré d'une garniture intérieure de véhicule, de manière à être non ou peu visible des passagers du véhicule.

De préférence, un véhicule peut comprendre au moins deux excitateurs audio. Par exemple, le véhicule peut comprendre un vitrage selon l'invention comprenant au moins deux excitateurs audio, peut comprendre au moins deux vitrages selon l'invention comprenant chacun au moins un excitateur audio, ou peut comprendre au moins un vitrage selon l'invention comprenant au moins un excitateur audio et au moins un autre excitateur audio, situé dans un vitrage du véhicule ou dans tout autre endroit du véhicule (tel que dans un montant, dans une portière, dans le tableau de bord, ou dans le toit).

## Revendications

1. Vitrage de véhicule comprenant :
- une feuille de verre (4) ou un ensemble vitré,
- une pièce en matière plastique (5) recouvrant en partie la feuille de verre ou l'ensemble vitré,
- au moins un système de fixation pour excitateur audio monté sur la feuille de verre ou sur l'ensemble vitré, comprenant une base et une partie d'accroche (3), la base du système de fixation étant montée fixe à la pièce en matière plastique (5), et
- au moins un excitateur audio fixé sur la partie d'accroche (3) du système de fixation.

2. Vitrage selon la revendication 1, dans lequel la base est fixée à la feuille de verre ou à l'ensemble vitré au moyen d'un ruban adhésif double face ou de colle (16).

3. Vitrage selon la revendication 1 ou 2, dans lequel l'excitateur audio est fixé sur la partie d'accroche (3) par vissage et/ou par emboîtement.

4. Vitrage selon l'une des revendications 1 à 3, dans lequel la feuille de verre est en verre organique ou minéral, ou l'ensemble vitré comprend au moins une feuille de verre qui est en verre organique ou minéral.

5. Vitrage selon l'une des revendications 1 à 4, comprenant un ensemble vitré et dans lequel l'ensemble vitré est un vitrage feuilleté comprenant au moins deux feuilles de verre entre lesquelles est inséré au moins un film intercalaire en matière plastique viscoélastique, le film intercalaire en matière plastique viscoélastique étant de préférence en PVB (polyvinyle butyral) ou en copolymère éthylène-acétate de vinyle, en particulier en PVB standard ou, plus préférentiellement, en PVB acoustique.

6. Vitrage selon l'une des revendications 1 à 5, dans lequel la pièce en matière plastique (5) est surmoulée sur au moins une partie de la base du système de fixation.

7. Vitrage selon l'une des revendications 1 à 6, dans lequel la base du système de fixation comprend une semelle (1) montée sur la feuille de verre (4) ou sur l'ensemble vitré et surmontée d'une embase (2), la semelle faisant saillie par rapport à l'embase.

8. Vitrage selon l'une des revendications 1 à 7, dans lequel le système de fixation est en matériau métallique, tels que l'aluminium et/ou l'acier inoxydable, en matériau thermoplastique, tel que les polyphthalamides, le poly(chlorure de vinyle) et/ou le poly(téréphtalate d'éthylène), ou en une combinaison de ceux-ci.

9. Vitrage selon l'une des revendications 1 à 8, dans lequel la pièce en matière plastique (5) est en polyuréthane, polypropylène, ou une combinaison de ceux-ci.

10. Vitrage selon l'une des revendications 1 à 5, dans lequel la base du système de fixation est thermoformée dans la pièce en matière plastique (5), de préférence le système de fixation est thermoformé dans la pièce en matière plastique (5).

11. Vitrage selon la revendication 10, dans lequel la pièce en matière plastique (5) et la base du système de fixation sont en polyéthylène, élastomère thermoplastique, acrylonitrile butadiène styrène, ou une combinaison de ceux-ci.

12. Vitrage selon l'une des revendications 1 à 11, qui est un pare-brise, une lunette arrière, un vitrage latéral et/ou un vitrage de toit d'un véhicule, de préférence automobile.

13. Procédé de fabrication d'un vitrage selon l'une des revendications 6 à 9, comprenant les étapes suivantes :
- le placement de la feuille de verre (4) ou de l'ensemble vitré dans un moule ;
- le positionnement du système de fixation comprenant une base et une partie d'accroche (3) dans le moule sur la feuille de verre (4) ou sur l'ensemble vitré ;
- la fermeture du moule de manière à créer une cavité de moulage (18) autour de la base du système de fixation, la partie d'accroche (3) du système de fixation étant hors de la cavité de moulage (18) ;
- l'injection de matière plastique dans la cavité de moulage (18) de manière à former un surmoulage constituant la pièce en matière plastique (5) ;
- l'ouverture du moule et le démoulage de la feuille de verre surmoulée ou de l'ensemble vitré surmoulé ;
- la fixation de l'excitateur audio sur la partie d'accroche (3) du système de fixation.

14. Procédé de fabrication d'un vitrage selon la revendication 10 ou 11, comprenant les étapes suivantes :
- le placement d'un bloc de matière plastique dans un moule configuré pour former le système de fixation comprenant une base et une partie d'accroche (3);
- le chauffage du bloc de matière plastique de manière à le ramollir ;
- le refroidissement de la matière plastique, de manière à obtenir une pièce thermoformée comprenant la pièce en matière plastique (5) et le système de fixation ;
- le démoulage de la pièce thermoformée ;
- l'assemblage de la pièce thermoformée avec la feuille de verre (4) ou l'ensemble vitré ;
- la fixation de l'excitateur audio sur la partie d'accroche (3) du système de fixation.

## Patentansprüche

1. Kraftfahrzeugverglasung, umfassend:
- eine Glasscheibe (4) oder eine verglaste Anordnung,
- ein Kunststoffstück (5), das die Glasscheibe oder die verglaste Anordnung teilweise abdeckt,
- mindestens ein Befestigungssystem für einen Audioerreger, der auf der Glasplatte oder auf der verglasten Anordnung montiert ist, umfassend eine Basis und ein Hakenteil (3), wobei die Basis des Befestigungssystems an dem Kunststoffstück (5) fest montiert ist, und
- mindestens einen Audioerreger, der an dem Hakenteil (3) des Befestigungssystems befestigt ist.

2. Verglasung nach Anspruch 1, wobei die Basis mittels eines doppelseitigen Haftbands oder eines Klebstoffs (16) an der Glasscheibe oder der verglasten Anordnung befestigt ist.

3. Verglasung nach Anspruch 1 oder 2, wobei der Audioerreger an dem Hakenteil (3) durch Verschrauben und/oder durch Aufstecken befestigt wird.

4. Verglasung nach einem der Ansprüche 1 bis 3, wobei die Glasscheibe aus organischem oder mineralischem Glas besteht oder die verglaste Anordnung mindestens eine Glasscheibe umfasst, die aus organischem oder mineralischem Glas besteht.

5. Verglasung nach einem der Ansprüche 1 bis 4, umfassend eine verglaste Anordnung, und wobei die verglaste Anordnung eine Verbundverglasung ist, umfassend mindestens zwei Glasscheiben, zwischen denen mindestens eine Zwischenlagenfolie aus viskoelastischem Kunststoff eingefügt ist, wobei die Zwischenlagenfolie aus viskoelastischem Kunststoff vorzugsweise aus PVB (Polyvinylbutyral) oder aus Ethylen-Vinylacetat-Copolymer, insbesondere Standard-PVB oder mehr bevorzugt Akustik-PVB besteht.

6. Verglasung nach einem der Ansprüche 1 bis 5, wobei das Kunststoffstück (5) auf mindestens einen Teil der Basis des Befestigungssystems überformt ist.

7. Verglasung nach einem der Ansprüche 1 bis 6, wobei die Basis des Befestigungssystems eine Sohle (1) umfasst, die auf der Glasscheibe (4) oder auf der verglasten Anordnung montiert ist und von einem Sockel (2) überragt wird, wobei die Sohle relativ zu dem Sockel vorspringt.

8. Verglasung nach einem der Ansprüche 1 bis 7, wobei das Befestigungssystem aus metallischem Material, wie Aluminium und/oder rostfreiem Stahl, aus thermoplastischem Material, wie Polyphthalamiden, Poly(vinylchlorid) und/oder Poly(ethylenterephthalat), oder aus einer Kombination davon besteht.

9. Verglasung nach einem der Ansprüche 1 bis 8, wobei das Kunststoffstück (5) aus Polyurethan, Polypropylen oder einer Kombination davon besteht.

10. Verglasung nach einem der Ansprüche 1 bis 5, wobei die Basis des Befestigungssystems in dem Kunststoffstück (5) thermogeformt ist, vorzugsweise das Befestigungssystem in dem Kunststoffstück (5) thermogeformt ist.

11. Verglasung nach Anspruch 10, wobei das Kunststoffstück (5) und die Basis des Befestigungssystems aus Polyethylen, thermoplastischem Elastomer, Acrylnitril-Butadien-Styrol oder einer Kombination davon bestehen.

12. Verglasung nach einem der Ansprüche 1 bis 11, die eine Windschutzscheibe, eine Heckscheibe, eine Seitenverglasung und/oder eine Dachverglasung eines Kraftfahrzeugs, vorzugsweise eines Personenkraftwagens ist.

13. Verfahren zum Herstellen eines Materials nach einem der Ansprüche 6 bis 9, umfassend die folgenden Schritte:
- Platzieren der Glasscheibe (4) oder der verglasten Anordnung in einer Form;
- Positionieren des Befestigungssystems, umfassend eine Basis und ein Hakenteil (3), in der Form auf der Glasscheibe (4) oder auf der verglasten Anordnung;
- Schließen der Form, um einen Formhohlraum (18) um die Basis des Befestigungssystems herum zu erzeugen, wobei sich das Hakenteil (3) des Befestigungssystems außerhalb des Formhohlraums (18) befindet;
- Einspritzen von Kunststoffmaterial in den Formhohlraum (18), um eine Überformung auszubilden, die das Kunststoffstück (5) bildet;
- Öffnen der Form und Entformen der umspritzten Glasscheibe oder der überformten verglasten Anordnung;
- Befestigen des Audioerregers an dem Hakenteil (3) des Befestigungssystems.

14. Verfahren zum Herstellen einer Verglasung nach einem der vorstehenden Ansprüche, umfassend die folgenden Schritte:
- Platzieren eines Blocks aus Kunststoffmaterial in einer Form, die zum Ausbilden des Befestigungssystems konfiguriert ist, umfassend eine Basis und ein Hakenteil (3);
- Erhitzen des Kunststoffblocks, um ihn zu erweichen;
- Abkühlen des Kunststoffmaterials, um ein thermogeformtes Teil zu erhalten, umfassend das Kunststoffstück (5) und das Befestigungssystem;
- Entformen des thermogeformten Stücks;
- Zusammenfügen des thermogeformten Teils mit der Glasscheibe (4) oder der verglasten Anordnung;
- Befestigen des Audioerregers an dem Hakenteil (3) des Befestigungssystems.

## Claims

1. A vehicle glazing comprising:
- a glass sheet (4) or a glazed assembly,
- a part made of plastic material (5) partly covering the glass sheet or the glazed assembly,
- at least one fixing system for an audio exciter mounted on the glass sheet or on the glazed assembly, comprising a base and an attachment part (3), the base of the fixing system being fixedly mounted to the part made of plastic material (5), and
- at least one audio exciter fixed to the attachment part (3) of the fixing system.

2. The glazing according to claim 1, wherein the base is fixed to the glass sheet or glazed assembly using a double-sided adhesive tape or a glue (16).

3. The glazing according to claim 1 or 2, wherein the audio exciter is fixed to the attachment part (3) by screwing and/or interlocking.

4. The glazing according to one of claims 1 to 3, wherein the glass sheet is made of organic or mineral glass, or the glazed assembly comprises at least one glass sheet that is made of organic or mineral glass.

5. The glazing according to one of claims 1 to 4, comprising a glazed assembly and wherein the glazed assembly is a laminated glazing comprising at least two glass sheets between which at least one interlayer film made of viscoelastic plastic is inserted, the interlayer film made of viscoelastic plastic preferably being made of PVB (polyvinyl butyral) or of ethylene-vinyl acetate copolymer, in particular of standard PVB or, more preferably, of acoustic PVB.

6. The glazing according to one of claims 1 to 5, wherein the part made of plastic material (5) is overmolded onto at least a part of the base of the fixing system.

7. The glazing according to one of claims 1 to 6, wherein the base of the fixing system comprises a soleplate (1) mounted on the glass sheet (4) or on the glazed assembly and surmounted by a mounting (2), the soleplate projecting with respect to the mounting.

8. The glazing according to one of claims 1 to 7, wherein the fixing system is made of a metallic material, such as aluminum and/or stainless steel, a thermoplastic material, such as polyphthalamides, polyvinyl chloride, and/or polyethylene terephthalate, or a combination thereof.

9. The glazing according to one of claims 1 to 8, wherein the part made of plastic material (5) is made of polyurethane, polypropylene, or a combination thereof.

10. The glazing according to one of claims 1 to 5, wherein the base of the fixing system is thermoformed in the part made of plastic material (5), preferably the fixing system is thermoformed in the part made of plastic material (5).

11. The glazing according to claim 10, wherein the part made of plastic material (5) and the base of the fixing system are made of polyethylene, thermoplastic elastomer, acrylonitrile butadiene styrene, or a combination thereof.

12. The glazing according to one of claims 1 to 11, which is a windscreen, a rear window, a side glazing and/or a roof glazing of a vehicle, preferably an automobile.

13. A method for manufacturing glazing according to one of claims 6 to 9, comprising the following steps:
- placing the glass sheet (4) or the glazed assembly in a mold;
- positioning the fixing system comprising a base and an attachment part (3) in the mold on the glass sheet (4) or on the glazed assembly;
- closing the mold so as to create a mold cavity (18) around the base of the fixing system, the attachment part (3) of the fixing system being outside the mold cavity (18);
- injecting plastic material into the molding cavity (18) so as to form an overmolding constituting the part made of plastic material (5);
- opening the mold and demolding the overmolded glass sheet or the overmolded glazed assembly;
- fixing the audio exciter to the attachment part (3) of the fixing system.

14. A method for manufacturing glazing according to claim 10 or 11, comprising the following steps:
- placing a block of plastic material in a mold configured to form the fixing system comprising a base and an attachment part (3);
- heating the block made of plastic material so as to soften it;
- cooling the plastic material so as to obtain a thermoformed part comprising the part made of plastic material (5) and the fixing system;
- demolding the thermoformed part;
- assembling the thermoformed part with the glass sheet (4) or glazed assembly;
- fixing the audio exciter to the attachment part (3) of the fixing system.
